# EUROPEAN PATENT SPECIFICATION

(11) **EP 3 106 356 B1**
(45) Date of publication and mention of the grant of the patent: **10.01.2018**
(21) Application number: 15465524.5
(22) Date of filing: 19.06.2015
(51) Int. Cl.: B60R 25/0215, F16D 57/00

(54) **ELECTRONIC STEERING COLUMN LOCK SYSTEM**
ELEKTRONISCHE LENKSÄULENVERRIEGELUNG
SYSTÈME ÉLECTRONIQUE DE VERROUILLAGE DE COLONNE DE DIRECTION

(43) Date of publication of application: 21.12.2016
(73) Proprietor: Continental Automotive GmbH, 30165 Hannover (DE)
(72) Inventor: MARIU, Stefan, 707515 Tomesti / Iasi (RO); CRISMARU, Ionut, 700080 Iasi (RO)

(56) References cited:
- EP-A2- 0 356 145
- EP-A2- 1 350 698
- US-A1- 2005 082 107
- US-A1- 2007 137 955
- US-A1- 2008 236 976

## Description

### Technical Field

The present invention relates to an electronic steering column lock system (ESCL-System). Such systems for example can be used to selectively lock or unlock a steering wheel of a vehicle (for example a car) or the like.

### Background

Known ESCL-systems usually comprise an actuator (e.g. a motor) that moves a pin into holes in the steering column in order to lock it as an anti-theft measure or removes the pin from the holes in order to unlock it so that the steering wheel can be freely moved for steering the vehicle. An usual system is disclosed by US 7, 327, 050 B2. Such known ESCL-systems allow only two states: locked and unlocked. EP1350698A shows a steering column lock system with a disk immersed in magnetorheological fluid.

### Summary of Invention

Regarding the above explained known ESCL-systems it is considered to be adversely that because of the fact that they only allow the two states, namely locked and unlocked, it is not possible to implement other functionalities to the ESCL-system.

One object of the present invention is to provide an improved electronic steering column lock system. In particular, one object of the present invention is to provide an electronic steering column lock system which is configured to enable adding of other functionalities to said system.

In order to achieve the object, the present invention provides an electronic steering column lock system comprising: a shaft, said shaft being a steering column shaft or said shaft being configured to be coupled to a steering column shaft, a housing, an electromagnet, being disposed at a fixed position inside the housing, at least one disk of a first type being rotatory form locked to the housing with regard to the centerline of the shaft, at least one disk of a second type being rotatory form locked to the shaft with regard to the centerline of the shaft, the at least one disk of the first type and the at least one disk of the second type being disposed adjacent to each other on a same side of the electromagnet inside the housing, wherein a surface of the at least one disk of the first type and a surface of the at least one disk of the second type are facing each other, wherein the form (i. e. the shape) of said surface of the at least one disk of the first type and the form (i. e. the shape) of the surface of said at least one disk of the second type are designed so that spacings remain between both of said surfaces if said surface of the disk of said first type and said surface of said disk of the second type are in contact to each other, said at least one disk of the first type and said at least one disk of the second type being made from ferromagnetic material or comprising ferromagnetic material, magnetorheological fluid being kept in the housing, and the at least one disk of the first type and the at least one disk of the second type are immersed, in particular are completely immersed, in the magnetorheological fluid.

The function of the electronic steering column lock system is as follows: the housing is considered to be stationary (for example it may be fixed inside a vehicle, for example at its dashboard. Because at least one disk is rotatory form locked to the housing and because at least one another disk is rotatory form locked to the shaft, said disks will move relatively to each other when the shaft is turned around its centerline (i. e. about its geometrical axis of rotation). Upon activating the coil (i. e. the electromagnet), a magnetic field will be generated that will produce two effects: a first effect is that the said disks will be attracted by the core and hence will come closer to each other (for example by sliding in a direction parallel to the centerline of the shaft and/or, depending of the embodiment, by deforming) which will generate friction between the adjacent disks at its contact areas. The second effect due to activating the coil is that the magnetorheological fluid will be also activated and thus through the shearing effect will also generate a force between the disks resulting in a turning moment that will oppose the rotation of the shaft relative to the housing of the system. Accordingly, both effects will reinforce the friction between adjacent disks so that it appears a braking effect on the steering columns shaft.

Due to the combined squeezing and shearing effects that appear in the magnetorheological fluid upon activation, high frequency braking pulses can be applied, generating haptic responses in a steering wheel which is coupled to the electronic steering column lock system. The high frequency braking pulses can be applied without wearing the disks which is an advantage of the invention. For example, the braking pulses can be applied without direct contact between adjacent disks.

Preferably, the locking system is activated only in load. Hence it can be programmed to activate itself upon unauthorized (without a key) entry in the car or at starting a car or the like. Thus difficulties in unlocking the steering column due to wheel positioning during parking are avoided.

A further advantage of the invention is that it provides a possibility to add other functions based on the ones above. For example, the invention provides the possibility to generate more rigidity in a steering wheel which is coupled to the electronic steering column lock system of the invention at high speeds. For this purpose, for example the electronic steering column lock system may comprise a control unit for controlling the applied voltage subject to a variable (for example the speed of a vehicle) which may be sensed by an external sensor coupled to the control unit. As another example, a haptic response in the steering wheel may be provided by the system by an input from other sensors, for example to make the driver aware of different road conditions or dangers. Accordingly, as an advantage the invention comes to offer greater flexibility to the electronic steering column lock system (ESCL system), allowing other functionalities to be added to the system. Accordingly, the invention provides a smart electronic steering column lock system using magnetorheological fluid. Such fluids it selves are known in the prior art. For example the magnetorheological fluid of the electronic steering column lock system of the invention may be a ferromagnetic fluid or another appropriate magnetorheological fluid. Preferably at least some of said spacings or all of said spacings between adjacent disks include and in particular are filled by magnetorheological fluid.

The term slight contact here has the meaning that due to such contact no force is transmitted. Depending on the embodiment or design of the disks, it is possible that spacings also remain between surfaces of adjacent disk facing each other if the disks are pressed together (i.e. if a force are transmitted).

The terms disk of a first type and disk of a second type are used to distinguish disks which are rotatory form locked to housing from disks which are rotatory form locked to the shaft. It is preferred that disks of the first type are different from disks of the second type, however as an alternative, depending of the embodiment, disks of the first type may be identical to disks of the second type.

There are numerous further possibilities for preferred refinements, some of them will be described in the following:
Preferably a number of spacings remain which are spaced apart from each other, in particular which are spaced from each other in a radial direction.
Regarding said two adjacently disposed disks it is possible that at least one of them is movable in a direction parallel to the centerline of the shaft. Regarding said two adjacently disposed disks it is preferred that both of them are movable in a direction parallel to the centerline of the shaft, respectively.

Regarding said two disks adjacently disposed on the same side of the electromagnet it is preferred that a geometrical plane defined by the main extension of the one of said disks is parallel to a geometrical plane defined by the main extension of the other of said disks. If more than two disks are adjacently disposed on a same of the electromagnet it is preferred that this applies to each pair of neighboring disks.

Regarding said two disks adjacently disposed on the same side of the electromagnet it is possible that at least one of its surfaces which are facing each other has a shape which is rotation-symmetric with regard to a center axis of the respective disk. Regarding said two disks adjacently disposed on the same side of the electromagnet it is preferred that both of its surfaces facing each other respectively have a shape which is rotation-symmetric with regard to a center axis of the respective disk. If more than two disks are adjacently disposed on a same of the electromagnet it is preferred that this applies to each pair of neighboring disks, respectively.

Regarding said two disks adjacently disposed on the same side of the electromagnet it is possible that at least one of its surfaces which are facing each other has a tridimensional shape. Regarding said two disks adjacently disposed on the same side of the electromagnet it is preferred that both of its surfaces which are facing each other have a tridimensional form. If more than two disks are adjacently disposed on a same of the electromagnet it is preferred that this applies to each pair of neighboring disks, respectively.

In a preferred embodiment the electronic steering column lock system comprises multiple disks of the first type, respectively being rotatory form locked to the housing with regard to the centerline of the shaft, and it comprises multiple disks of the second type, respectively being rotatory form locked to the shaft with regard to the centerline of the shaft, herein a first set comprising disks of the first type and a second set comprising disks of the second type are disposed on the same side of the electromagnet, wherein said disks of the first set and said disks of the second set being disposed alternating to each other, wherein the remaining disks of the first type (as a third set) and the remaining disks of the second type (as a fourth set) are disposed alternating to each other on the other side of the electromagnet, wherein with regard to each respective neighboring pair of disks comprising a disk of the first type and a disk of the second type it is provided:
- a surface of the disk of the first type and a surface of the disk of the second type are facing each other, and
- the form of said surface of the disk of the first type and the form of the surface of said disk of the second type are designed so that spacings remain between both of said surfaces if said surface of said disk of the first type and said surface of said disk of the second type are in slight contact to each other. When the shaft is turned about its centerline this will result in that the disks of the second set will rotate relative to the disks of the first set and that the disks of the fourth set will rotate relative to the disks of the third set. The wording alternating to each other has the meaning that each pair of adjacent disks located on the same side of the electromagnet comprises one disk which is rotatory form coupled to the housing and comprises one disk which is rotatory form coupled to the shaft. Using a number of disks more than two provides the advantage to enable increased shear forces.

Preferably, each disk of the first type is slidable relative to the housing parallel to the centerline of the shaft, respectively, and each disk of the second type is slidable relative to the shaft parallel to the centerline of the shaft, respectively. Such embodiment facilitates that adjacent disks come to each other for direct contact in response to an activation of the coil. This provides the possibility that the disks can move freely along their axis.

It is preferred that each disk of the first type and each disk of a second type comprises a central opening, respectively, wherein the shaft being axially extended through said respective central openings. Preferably all disks have a corresponding outer diameter and/or a corresponding inner diameter.

It is also preferred that said housing provides two rotary feedthroughs for the shaft, said feedthroughs being spaced apart from each other in a direction parallel to the centerline of the shaft, the shaft being fed through both of the feedthroughs.

In a preferred embodiment it is provided that the major extension of each disk of the first type and the major extension of each disk of the second type is perpendicular to the centerline of the shaft. Preferably, the respective planes of the disks which are defined by the main extension of its respective disk extend parallel or at least substantially parallel to each other.

Preferably the electromagnet comprises a ferromagnetic core and a coil.

The shaft may be made from nonmagnetic material, like for example synthetic material (e. g. plastic or the like). If the steering column shaft is mad from nonmagnetic material, upon activating the coil most of the magnetic field inside the activated coil will be directed through the coils core, the disks and may be closed through an outer casing (for example comprising a surrounding side wall and respective lids) that may be made from ferromagnetic material. This will cause an increase in apparent viscosity on direction parallel to the shaft and perpendicular to the rotation plane of the disks.

According to a preferred embodiment the ferromagnetic disks may be made of steel or the like.

According to a preferred embodiment the housing has an inner wall surrounding said disks, at least one notch or a number of notches are formed at an inner surface of the housing, each notch respectively extending parallel to the centerline of the shaft, each of the disks of the first type at its respective outer edge comprises at least one radial protrusion or a number of radial protrusion, wherein each individual of said disks protrusions are engaged in one of the notches for providing a rotatory form lock of said respective disks to the housing with regard to the centerline of the shaft, at least one at least one notch or a number of notches is/are formed at an outer surface of the shaft, each notch respectively extending parallel to the centerline of the shaft, each of the disks of the second type at its respective inner edge comprises at least one radial protrusion or a number of radial protrusion, wherein each individual of said disks protrusions is engaged in one of the notches for providing a rotatory form lock of said respective disks to the shaft with regard to the centerline of the shaft. An advantage of this embodiment is that it may combine a rotatory form closure with the possibility that the disks can slide along its central (i. e. parallel to the centerline of the shaft) axis.

It is preferred that the housing comprises an outer casing, in particular comprising a surrounding side wall, a bottom wall and an upper wall and that, the outer casing comprises ferromagnetic material or consists of ferromagnetic material. The components of the casing for example may be formed from steel or the like.

It is preferred that the housing comprises a shell being fixed inside said outer casing, wherein said shell comprises nonmagnetic material or consists of nonmagnetic material and/or said shell comprises insulating material or consists of insulating material, wherein in particular the axial notch or the axial notches being formed at an inner surface of the shell. Preferably, by the shell the electromagnet is sealed off from the outer casing. It is also preferred that by the shell the electromagnet is sealed from the magnetorheological fluid. The electromagnet may be encapsulated in the nonmagnetic insulating material.

It is possible that each disk at its both opposite surfaces has a pattern comprising circular grooves and circular protrusions alternating each other, the circular grooves and the circular protrusions may extend concentrically with regard to the centerline of the shaft, wherein at each radius where at the one of the said both surfaces a groove is extending at the other of said both surfaces a protrusion is extending and vice versa, respectively. In particular in a cross section a curvature of the grooves at its respective apex has a radius which is less compared to a radius of a curvature of the protrusions at its respective apex and wherein in particular at each of said surfaces the alternating grooves and protrusions forming a wavelike profile in section planes including the centerline of the shaft.

Preferably the disks are stacked with regard to each respective neighboring pair of disks comprising a disk of the first type and a disk of the second type so that: protrusions of said disk of the first type and grooves of said disk of the second type are engaging each other and are bordering a, in particular circular, spacing including magnetorheological fluid, and protrusions of said disk of the second type and grooves of said disk of the first type are engaging each other and are bordering a, in particular circular, spacing including magnetorheological fluid.

In an appropriate embodiment the housing may be fixed or may be configured to be fixed to a vehicle, for example to a dashboard of a car or the like.

Preferably, the electronic steering column lock system comprises a power supply unit and a control unit which may be coupled to the power supply unit and to the electromagnet. In the control unit may be configured to provide an electrical voltage being controlled by the control unit to the electromagnet. The electronic steering column lock system may comprise an external sensor configured to sense a variable. The control unit may be configured for controlling the electrical voltage subject to a signal provided by the external sensor.

The concept described above can be extended to normal brakes or clutches by using the system provided by the invention with for example the difference that said shaft may be a shaft of a brake or a clutch.

### Brief Description of Drawings

The invention will now be described by way of example with reference to the accompanying drawings of which:
- Fig. 1: is an exploded view of an exemplary embodiment of an electronic steering column lock system according to the invention;
- Fig. 2: is a schematic sectional view of an inventive electronic steering column lock system comprising the components as shown by Fig. 1, wherein the electronic steering column lock system is in an unlocked state and wherein the section view is taken in a plane comprising the centerline of the steering column shaft as well as engaging means of the disks, the shaft and the housing;
- Fig. 2a: is a schematic sectional view of the embodiment of Fig. 2, however shown in another section plane;
- Fig. 3: shows an enlarged detail III according to Fig. 2;
- Fig. 4: is a schematic sectional view of the electronic steering column lock system shown by Fig. 1 - 3, however shown in a locked state; and
- Fig. 5: is an enlarged view of detail V according to Fig. 4.

### Description of Embodiments

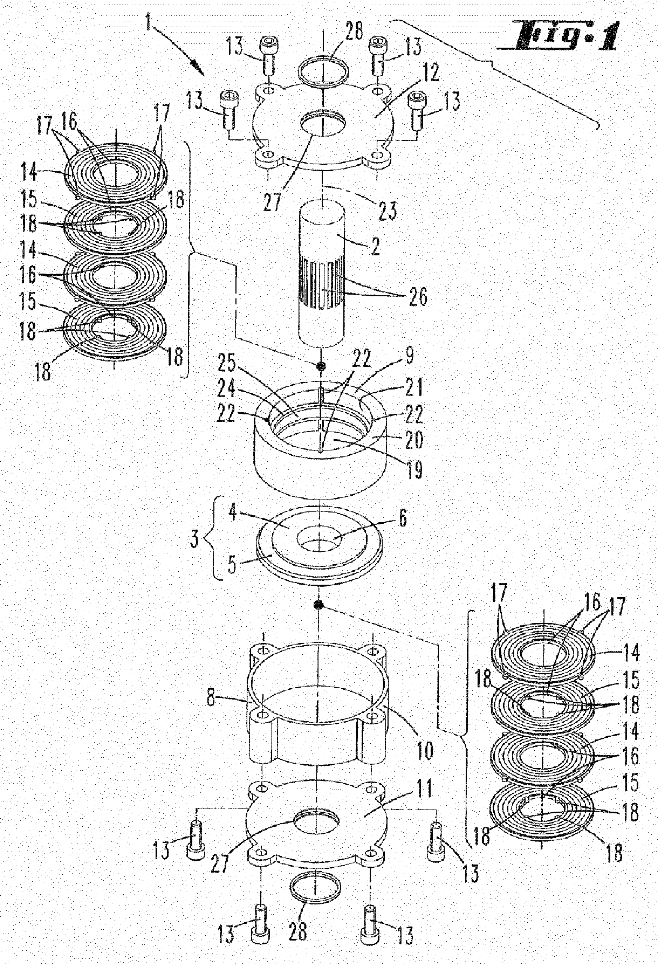

With reference to Figures 1 - 5 it is described by way of example an embodiment of an electronic steering column lock system 1 according to the invention. It comprises a nonmagnetic shaft 2 (shown only partially) which in the example is a steering column shaft of a vehicle or the like and which may be connected to a steering wheel (not shown in the Figures). The electronic steering column lock system comprises an electromagnet 3 consisting of a ferromagnetic core 4 and a coil 5 surrounding the core 4. A central opening 6 is formed in the core 4 wherein said opening 6 has a diameter corresponding to the diameter of the shaft 2 so that the shaft 2 can be fed through the core 4. Electronic steering column lock system 1 comprises a housing 7 having a ferromagnetic outer casing 8 and a nonmagnetic shell 9 fixed inside said casing 8. In more detail the outer casing 8 comprises a surrounding sidewall 10, a bottom wall 11 and an upper wall 12 whereat walls 11, 12 have the function of lids which can be fixed by screws 13 at the bottom and at the top of the circular side wall 10 after mounting further components inside the casing 8.

In the shown example the electronic steering column lock system 1 comprises four ferromagnetic disks 14 of a first type and four ferromagnetic disks 15 of a second type. Each of the disks 14, 15 comprises a central opening 16 having a diameter matching the diameter of the shaft 2. Each disk 14 of the first type at its respective outer edge comprises four protrusions 17 protruding from the circular outer edge in the respective outer radial direction. Protrusions 17 are distributed in equal distances along the circumference. Each of the disks 15 of the second type at its respective edge of its opening 16 comprises four protrusions 18 protruding from the edge in a respective inwardly radial direction. Also the inner protrusions 18 are distributed along the circumference in equal distances to each other.

Shell 9 is made from a sleeve having an outer diameter which matches the inner diameter of the surrounding side wall 10 and which corresponds in its height to the side wall 10, too. Shell 9 may be fixed within casing 8 for example by fixing the walls 11, 12 at the side wall 10. As an alternative, shell 9 may be stacked within side wall 10 or clamped within side wall 10 if having a diameter which is appropriate to provide a press fit. Shell 9 has a central opening 19 which is surrounded by its 20. Inner surface 21 of wall 20 extends along the circumference. In an upper and in a lower section of surface 21 its diameter matches the outer diameter of the disks 14, 15. Within said upper and lower sections of surface 21, respectively, four notches 22 extending axially, i. e. parallel to a centerline 23 of the shaft 2. In the mounted state each individual of said disks 14 protrusions 17 engages with one of these notches 22 to provide a rotatory form lock between the disks 14 and the shell 9 with regard to the centerline 23 of the shaft 2. Shell 9 comprises a circular protrusion 24 protruding radial inwardly from the inner surface 21 between its lower and upper sections. Within protrusion 24 a circular groove is formed. The outer diameter of groove 25 matches the outer diameter of coil 5.

In the example, a number of notches 26 are formed in the cylindrical surface of shaft 2. The notches 26 are spaced from each other along the circumference and extend parallel to the centerline 23. In the mounted state each individual of said disks 15 protrusions 18 is engaged in one of the notches 26 for providing a rotatory form lock of the respective disk 15 to the shaft 2 with regard to the centerline 23 of the shaft 2. Accordingly, in the mounted state the disks 14 are connected to the housing 7 by protrusions 17 and notches 22 in a manner such that they are slidable relative to the housing 7 parallel to the centerline 23 such that they are not rotatable relative to the housing around the centerline 23. On the other hand disks 15 are coupled to the shaft 2 by means of protrusions 18 and notches 26 such that they are slidable relative to the shaft 2 parallel to the centerline 23 however such that they are not rotatable around shaft 2 with regard to its centerline 23. In the shown example disks 15 are flexible so that they can be elastically deformed for inserting its protrusions 18 in notches 26. However, from the above it appears to those skilled in the art that in an alternative axial protrusions may be formed at the shaft 2 and recesses may be formed at the inner edge of disks 15 for providing a rotatory form closure. With regard to the disks 14 it is also possible to replace its protrusions 17 by recesses and to form mating axial protrusions at the inner surface 21 for engaging to provide a rotatory form lock.

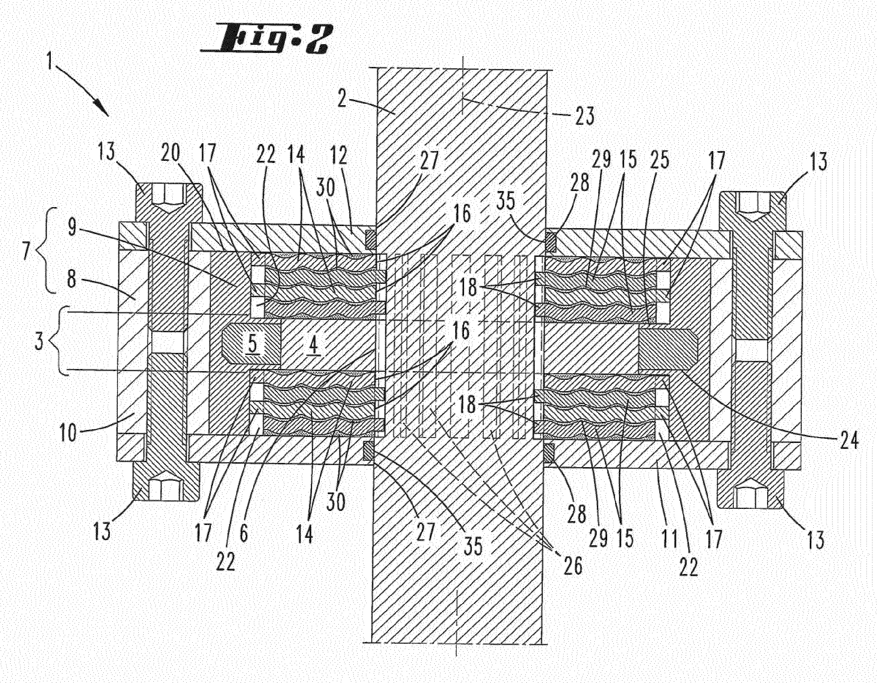

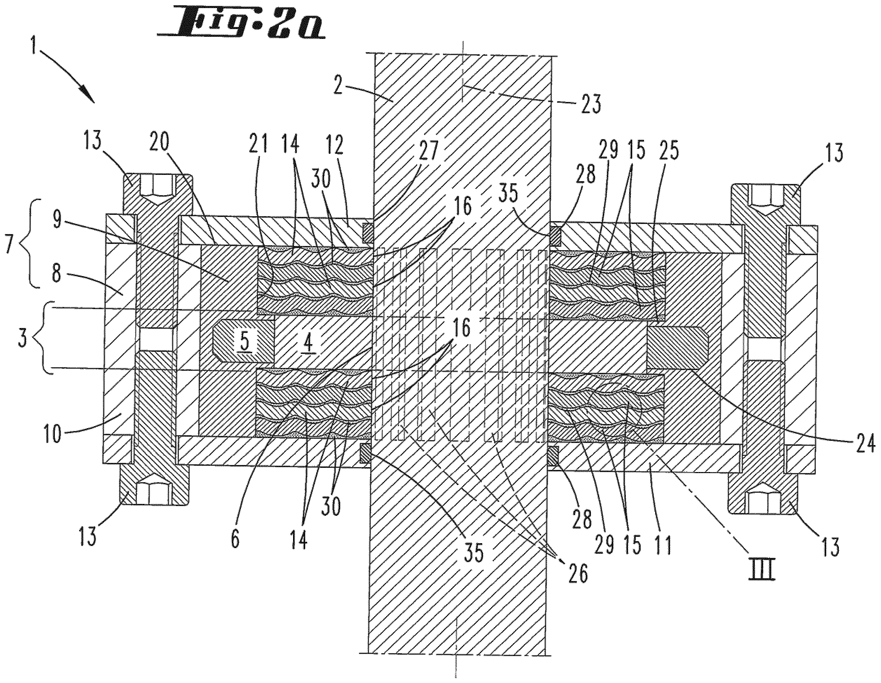

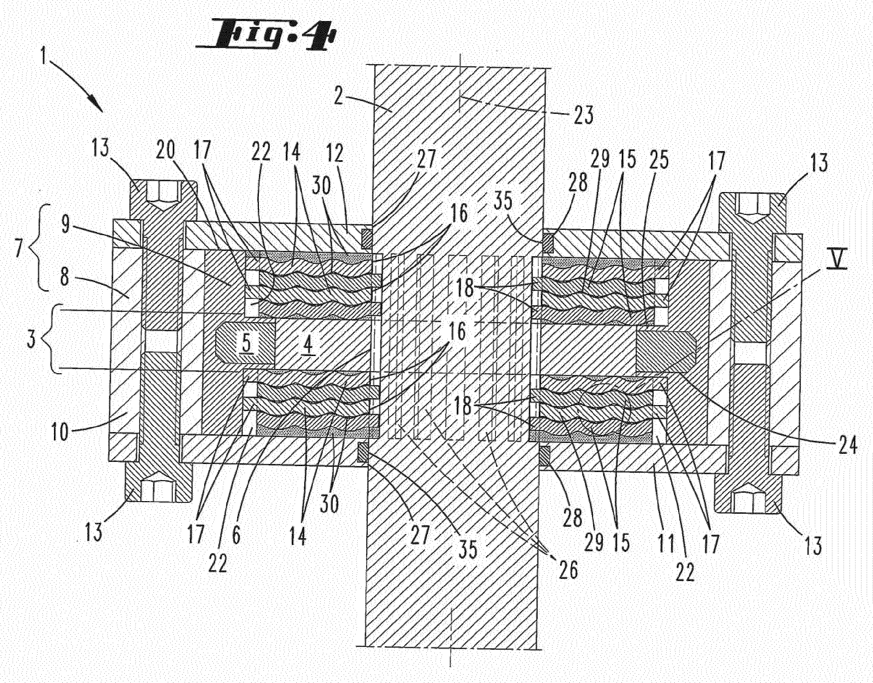

Figures 2, 2a and 4 show the electronic steering column lock system 1 after mounting the components shown by Figure 1. Disks 14 and disks 15 are disposed alternating to each other. As shown for example by Figure 2 a first set comprising two disks 14 of the first type and a second set comprising two disks 15 of the second type are disposed on the upper side of the electromagnet 3 wherein disks 14 and disks 15 alternate. A third set comprising two disks 14 and a fourth set comprising two disks 15 are both disposed on the lower side of the electromagnet 3 wherein said disks 14 and said disks 15 alternate to each other. Shaft 2 is fed through the opening 6 and through openings 16 and 19 as well through central openings 27 formed in the walls 11, 12. In the example in each opening 27 is formed a circular groove for inserting a gasket (O-ring) 28. Openings 27 provide two rotary sealed feedthroughs 35 for the shaft 2. The feedthroughs 35 allow rotation of shaft 2 about centerline 23 relative to the housing 7. Within the inner chamber of housing 7 a magnetorheological fluid 30 is kept. The disks 14, 15 are completely immersed in said magnetorheological fluid 30.

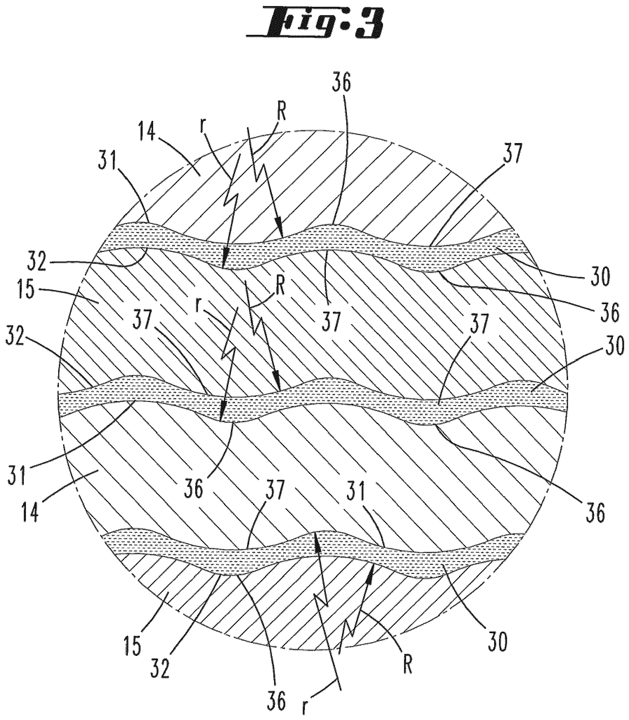

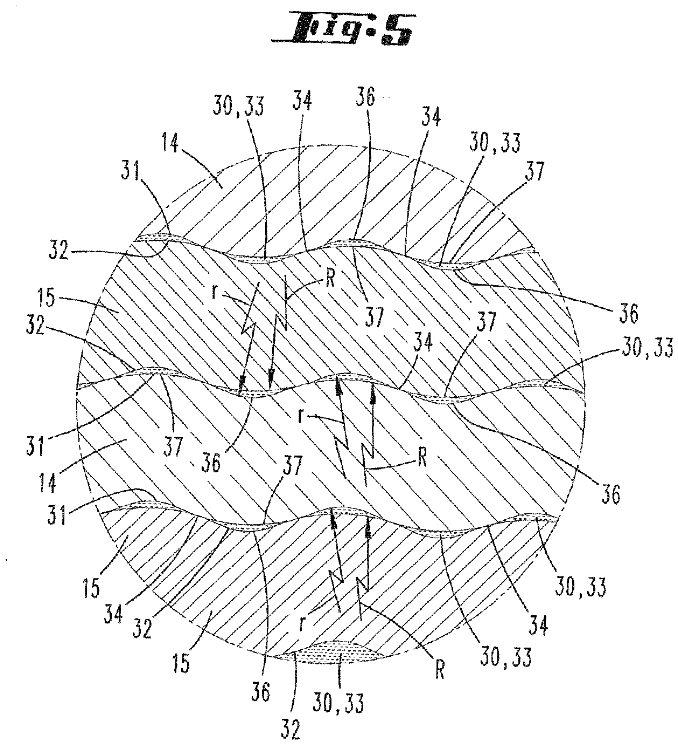

As it is shown by Figure 5 in more detail, with regard to each respective neighboring pair of disks comprising a disk 14 of the first type and a disk 15 of the second type it is provided that a surface 31 of disk 14 and a surface 32 of disk 15 are facing each other. The form of said surfaces 31 and the form of the surfaces 32 are designed so that spacings 33 which are spaced apart from each other remain between each pair of disks 14, 15 if a disk 14 and a disk 15 are brought together in contact. In the exemplary embodiment spacings 33 remain also if the said disks 14, 15 are pressed together in a direction parallel to the centerline 23. In Figure 5 areas of contact are designated by reference numeral 34. Spacings 33 are filled by the magnetorheological fluid 30. Whereas Figure 5 refers to the locked state of the system, Figure 3 relates to the unlocked state wherein the disks 14, 15 are discharged so that (compared to Figure 5) no areas of contact 34 or only slight contact areas between disks 14, 15 exist.

Figures 3 and 5 also show in detail that each disk 14, 15 at its both opposite surfaces 31, 32 has a pattern comprising circular grooves 36 and circular protrusions 37 alternating with each other in a radial direction and formed concentrically with regard to the centerline 23. With regard to each individual disk 14 at each radius where at the one of said both surfaces 31 a groove 36 is extending at the other of said surfaces 31 a protrusion 37 is extending, and vice versa. In the example shown by the Figures (see Figures 3 and 5) in a cross section the grooves 36 and protrusions 37 have rounded shapes providing together a wavelike profile. The curvature of the grooves 36 at its respective apex has a radius r which is less compared to a radius R of a curvature of the protrusions 37 at its respective apex. Accordingly, the profiles of the disks 14 and 15 do not overlap perfectly. This allows some fluid 30 to remain between the disks 14, 15, creating a second shearing effect which can be influenced by activating or deactivating the coil. At each of the surfaces 31, 32 the alternating grooves 36 and protrusions 37 form a wave like profile.

For applying an electrical voltage to the electromagnet 3, the electronic steering column lock system 1 may comprise a power supply unit and a control unit (both are not shown by the Figures). Further, the electronic steering column lock system 1 may comprise one or more external sensors configured to sense a respective variable (for example the speed of a vehicle comprising the system). In a preferred embodiment the control unit may be configure to control the electrical voltage supplied to the electromagnet subject to a signal provided by at least one external sensor.

In the unlocked state shown by Figures 2, 2a and 3 no electrical voltage is applied to the electromagnet 3. Accordingly, disks 14, 15 are in slight contact or in no contact with each other. Because housing 7 is fixed (for example at a dash panel of a vehicle) it cannot rotate about the centerline 23. If a person rotates the shaft 2 around the centerline 23 because of the rotationary form closure also disks 15 rotate about the centerline 23. On the other hand, disks 14 because of its rotationary form closure with the housing 7 remain stationary. This means that disks 15 will rotate relative to disks 14. In the example the outer diameter of disks 14 correspond to the outer diameter of disks 15 so that disks 14 and disks 15 are overlapping each other. Because disks 14 and disks 15 do not apply axial forces (i. e. forces parallel to centerline 23) to each other in the unlocked state no contact friction occurs. Further, since no electrical voltage is applied the apparent viscosity of the magnetorheological fluid 30 is only small. In summary, due to both effects the required torque for turning the shaft 2 relative to the housing 7 is small, too.

In contrary, in the locked state of the electronic steering column lock system 1 as shown by Figures 4 and 5 an electrical voltage is applied to the electromagnet 3. Accordingly, because of the reasons explained before the disks 14, 15 will be attracted by the core 4 and hence moving closure to each other which results in a contact between plates 14 and 15. This in turn will generate a contact friction. Further, due to the applied electrical voltage the magnetorheological fluid 30 will also be activated and the shearing effect will also generate a force between disks 14, 15. Both effects will together oppose the rotation of the shaft 2, reinforcing the friction. Thus appears a breaking effect on the steering columns shaft.

### Reference signs list

- 1: electronic steering column lock system
- 2: shaft
- 3: electromagnet
- 4: core
- 5: coil
- 6: central opening
- 7: housing
- 8: outer casing
- 9: shell
- 10: side wall
- 11: bottom wall
- 12: upper wall
- 13: screws
- 14: disk
- 15: disk
- 16: central opening
- 17: protrusion
- 18: protrusion
- 19: central opening
- 20: inner wall
- 21: surface
- 22: notch
- 23: centerline
- 24: protrusion
- 25: groove
- 26: notch
- 27: central opening
- 28: gasket
- 29: chamber
- 30: magnetorheological fluid
- 31: surface
- 32: surface
- 33: spacings
- 34: contact area
- 35: feedthrough
- 36: grooves
- 37: protrusion

- R: radius
- r: radius

## Claims

1. An electronic steering column lock system (1) comprising: a shaft (2), said shaft being a steering column shaft or said shaft being configured to be coupled to a steering column shaft, a housing (7), an electromagnet (3), being disposed at a fixed position inside the housing (7), at least one disk (14) of a first type being rotatory form locked to the housing (7)with regard to the centerline (23) of the shaft (2), at least one disk (15) of a second type being rotatory form locked to the shaft (2) with regard to the centerline (23) of the shaft (2), the disk (14) of the first type and the disk (15) of the second type being disposed adjacent to each other on a same side of the electromagnet (3) inside the housing (7), wherein at least one of said both adjacently disposed disks (14, 15) is movable in a direction parallel to the centerline (23) or both of said disks (14, 15) are movable in a direction parallel to the centerline (23), wherein a surface (31) of the disk (14) of the first type and a surface (32) of the disk (15) of the second type are facing each other, wherein the form of said surface (31) of the disk (14) of the first type and the form of the surface (32) of said disk (15) of the second type are designed so that spacings (33) remain between both of said surfaces (31, 32) if said surface (31) of the disk (14) of the first type and said surface (32) of the disk (15) of the second type are in slight contact to each other, said disk (14) of the first type and said disk (15) of the second type being made from ferromagnetic material or comprising ferromagnetic material, magnetorheological fluid (30) being kept in the housing (7), and the disk (14) of the first type and the disk (15) of the second type are immersed, in particular are completely immersed, in the magnetorheological fluid (30).

2. The electronic steering column lock system (1) according to claim 1, **characterized in that** the electronic steering column lock system (1) : comprises multiple disks (14) of the first type, respectively being rotatory form locked to the housing (7) with regard to the centerline (23) of the shaft (2), comprises multiple disks (15) of the second type, respectively being rotatory form locked to the shaft (2) with regard to the centerline (23) of the shaft (2), **in that** a first set comprising disks (14) of the first type and a second set comprising disks (15) of the second type are disposed on the same side of the electromagnet (3), wherein said disks (14) of the first set and said disks (15) of the second set being disposed alternating to each other, wherein the remaining disks (14) of the first type and the remaining disks (15) of the second type are disposed alternating to each other on the other side of the electromagnet (3), wherein with regard to each respective neighboring pair of disks comprising a disk (14) of the first type and a disk (15) of the second type:
- a surface (31) of the disk (14) of the first type and a surface (32) of the disk (15) of the second type are facing each other, and
- the form of said surface (31) of the disk (14) of the first type and the form of the surface (32) of said disk (15) of the second type are designed so that spacings (33) remain between both of said surfaces (31, 32) if said surface (31) of said disk (14) of the first type and said surface (32) of said disk (15) of the second type are in slight contact to each other.

3. The electronic steering column lock system (1) according to any of claims 1-2, **characterized in that**: each disk (14) of the first type is slidable relative to the housing (7) parallel to the centerline (23) of the shaft (2), respectively, and each disk (15) of the second type is slidable relative to the shaft (2) parallel to the centerline (23) of the shaft (2), respectively.

4. The electronic steering column lock system (1) according to any of claims 1-3, **characterized in that**: each disk (14) of the first type and each disk (15) of a second type comprises a central opening (16), respectively, wherein the shaft (2) being axially extended through said respective central openings (16).

5. The electronic steering column lock system (1) according to any of claims 1-4, **characterized in that**: said housing (7) provides two rotary feedthroughs (35) for the shaft (2), said feedthroughs (35) being spaced apart from each other in a direction parallel to the centerline (23) of the shaft (2), the shaft (2) being fed through both of the feedthroughs (35).

6. The electronic steering column lock system (1) according to any of claims 1-5, **characterized in that** a respective plane defined by the major extension of a respective disk (14) of the first type and the a respective plane defined by the major extension of a respective disk (15) of the second type is perpendicular to the centerline (23) of the shaft (2).

7. The electronic steering column lock system (1) according to any of claims 1-6, **characterized in that** the electromagnet (3) comprises a ferromagnetic core (4) and a coil (5).

8. The electronic steering column lock system (1) according to any of claims 1-7, **characterized in that** the shaft (2) being made from nonmagnetic material.

9. The electronic steering column lock system (1) according to any of claims 1-8, **characterized in that**: the housing (7) having an inner wall (20) surrounding said disks (14, 15), at least one notch (22) or a number of notches (22) being formed at an inner surface (21) of the housing (7), each notch (22) respectively extending parallel to the centerline (23) of the shaft (2), each of the disks (14) of the first type at its respective outer edge comprises at least one radial protrusion (17) or a number of radial protrusion (17), wherein each individual of said disks (14) protrusions (17) being engaged in one of the notches (22) for providing a rotatory form lock of said respective disks (14) to the housing (7) with regard to the centerline (23) of the shaft (2), at least one at least one notch (26) or a number of notches (26) being formed at an outer surface of the shaft (2), each notch (26) respectively extending parallel to the centerline (23) of the shaft (2), each of the disks (15) of the second type at its respective inner edge comprises at least one radial protrusion (18) or a number of radial protrusion (18), wherein each individual of said disks (15) protrusions (18) being engaged in one of the notches (26) for providing a rotatory form lock of said respective disks (15) to the shaft (2) with regard to the centerline (23) of the shaft (2).

10. The electronic steering column lock system (1) according to any of claims 1-9, **characterized in that**: the housing (2) comprises an outer casing (8), in particular comprising a surrounding side wall (10), a bottom wall (11) and an upper wall (12), the outer casing (8) comprising ferromagnetic material or consists of ferromagnetic material.

11. The electronic steering column lock system (1) according to any of claims 1-10, **characterized in that**: the housing (2) comprises a shell (9) being fixed inside said outer casing (8), said shell (9) comprises nonmagnetic material or consists of nonmagnetic material and/or said shell comprises insulating material or consists of insulating material, wherein in particular the axial notch or the axial notches being formed at an inner surface of the shell.

12. The electronic steering column lock system (1) according to any of claims 1-11, **characterized in that** each disk (14, 15) at its both opposite surfaces (31, 32) has a pattern comprising circular grooves (36) and circular protrusions (37) alternating each other, the circular grooves (36) and the circular protrusions (37) extending concentrically with regard to the centerline (23) of the shaft (2), wherein at each radius where at the one of the said both surfaces (31, 32) a groove (36) is extending at the other of said both surfaces (31, 32) a protrusion (37) is extending and vice versa, respectively, wherein in particular in a cross section a curvature of the grooves (36) at its respective apex has a radius (r) which is less compared to a radius (R) of a curvature of the protrusions (37) at its respective apex and wherein in particular at each of said surfaces (31, 32) the alternating grooves (36) and protrusions (37) forming a wavelike profile in section planes including the centerline (23) of the shaft (2).

13. The electronic steering column lock system (1) according to claim 12, **characterized in that** the disks (14, 15) are stacked with regard to each respective neighboring pair of disks comprising a disk of the first type and a disk of the second type so that: protrusions (37) of said disk (14) of the first type and grooves (36) of said disk (15) of the second type are engaging each other and are bordering a, in particular circular, spacing (33) including magnetorheological fluid (30), and protrusions (37) of said disk (15) of the second type and grooves (36) of said disk (14) of the first type are engaging each other and are bordering a, in particular circular, spacing (33) including magnetorheological fluid (30).

14. The electronic steering column lock system (1) according to any of claims 1-13, **characterized in that**: the housing (7) being fixed or being configured to be fixed to a vehicle, in particular to a dashboard of a vehicle.

15. The electronic steering column lock system (1) according to any of claims 1-14, **characterized in that**: the electronic steering column lock system (1) comprises a power supply unit and a control unit coupled to the power supply unit and to the electromagnet (3), wherein the control unit is configured to provide an electrical voltage being controlled by the control unit to the electromagnet (3), and **in that** the electronic steering column lock system (1) comprises an external sensor configured to sense a variable, wherein the control unit being configured for controlling the electrical voltage subject to a signal provided by the external sensor.

## Patentansprüche

1. Elektronische Lenksäulenverriegelung (1), aufweisend:
eine Welle (2), wobei die Welle eine Lenksäulenwelle ist oder die Welle ausgebildet ist, um an eine Lenksäulenwelle gekoppelt zu werden, ein Gehäuse (7), einen Elektromagneten (3), der an einer festen Position im Inneren des Gehäuses (7) angeordnet ist, mindestens eine Scheibe (14) eines ersten Typs, die in Bezug auf die Mittellinie (23) der Welle (2) mit dem Gehäuse (7) rotationsformverriegelt ist, mindestens eine Scheibe (15) eines zweiten Typs, die in Bezug auf die Mittellinie (23) der Welle (2) mit der Welle (2) rotationsformverriegelt ist, wobei die Scheibe (14) des ersten Typs und die Scheibe (15) des zweiten Typs auf der gleichen Seite des Elektromagneten (3) im Inneren des Gehäuses (7) nebeneinander angeordnet sind, wobei mindestens eine der beiden nebeneinander angeordneten Scheiben (14, 15) in einer Richtung parallel zu der Mittellinie (23) bewegbar ist oder beide der Scheiben (14, 15) in eine Richtung parallel zu der Mittellinie (23) bewegbar sind, wobei eine Oberfläche (31) der Scheibe (14) des ersten Typs und eine Oberfläche (32) der Scheibe (15) des zweiten Typs zueinander weisen, wobei die Form der Oberfläche (31) der Scheibe (14) des ersten Typs und die Form der Oberfläche (32) der Scheibe (15) des zweiten Typs so konzipiert sind, dass Zwischenräume (33) zwischen beiden der Oberflächen (31, 32) verbleiben, wenn die Oberfläche (31) der Scheibe (14) des ersten Typs und der Oberfläche (32) der Scheibe (15) des zweiten Typs in leichtem Kontakt miteinander sind, wobei die Scheibe (14) des ersten Typs und die Scheibe (15) des zweiten Typs aus ferromagnetischem Material gefertigt sind oder ferromagnetisches Material aufweisen, magnetorheologisches Fluid (30) in dem Gehäuse (7) gehalten wird, und die Scheibe (14) des ersten Typs und die Scheibe (15) des zweiten Typs in das magnetorheologische Fluid (30) tauchen und insbesondere vollständig in dieses tauchen.

2. Elektronische Lenksäulenverriegelung (1) nach Anspruch 1, **dadurch gekennzeichnet, dass** die elektronische Lenksäulenverriegelung (1): mehrere Scheiben (14) des ersten Typs aufweist, die jeweils in Bezug zu der Mittellinie (23) der Welle (2) mit dem Gehäuse (7) rotationsformverriegelt sind, mehrere Scheiben (15) des zweiten Typs aufweist, die jeweils in Bezug auf die Mittellinie (23) der Welle (2) mit der Welle (2) rotationsformverriegelt sind, dass ein erster Satz, der Scheiben (14) des ersten Typs aufweist, und ein zweiter Satz, der Scheiben (15) des zweiten Typs aufweist, auf der gleichen Seite des Elektromagneten (3) angeordnet sind, wobei die Scheiben (14) des ersten Satzes und die Scheiben (15) des zweiten Satzes alternierend zueinander angeordnet sind, wobei die verbleibenden Scheiben (14) des ersten Typs und die verbleibenden Scheiben (15) des zweiten Typs alternierend miteinander auf der anderen Seite des Elektromagneten (3) angeordnet sind, wobei in Bezug auf jedes jeweilige benachbarte Paar von Scheiben, das eine Scheibe (14) des ersten Typs und eine Scheibe (15) des zweiten Typs aufweist:
- eine Oberfläche (31) der Scheibe (14) des ersten Typs und eine Oberfläche (32) der Scheibe (15) des zweiten Typs zueinander weisen, und
- die Form der Oberfläche (31) der Scheibe (14) des ersten Typs und die Form der Oberfläche (32) der Scheibe (15) des zweiten Typs so konzipiert sind, dass Zwischenräume (33) zwischen beiden der Oberflächen (31, 32) verbleiben, wenn die Oberfläche (31) der Scheibe (14) des ersten Typs und die Oberfläche (32) der Scheibe (15) des zweiten Typs in leichtem Kontakt miteinander sind.

3. Elektronische Lenksäulenverriegelung (1) nach einem der Ansprüche 1 bis 2, **dadurch gekennzeichnet, dass**: jede Scheibe (14) des ersten Typs jeweils relativ zu dem Gehäuse (7) parallel zu der Mittellinie (23) der Welle (2) gleitfähig ist, und jede Scheibe (15) des zweiten Typs jeweils relativ zu der Welle (2) parallel zu der Mittellinie (23) der Welle (2) gleitfähig ist.

4. Elektronische Lenksäulenverriegelung (1) nach einem der Ansprüche 1 bis 3, **dadurch gekennzeichnet, dass**: jede Scheibe (14) des ersten Typs und jede Scheibe (15) eines zweiten Typs jeweils eine zentrale Öffnung (16) aufweisen, wobei sich die Welle (2) axial durch die jeweiligen zentralen Öffnungen (16) erstreckt.

5. Elektronische Lenksäulenverriegelung (1) nach einem der Ansprüche 1 bis 4, **dadurch gekennzeichnet, dass**: das Gehäuse (7) zwei Rotationsdurchführungen (35) für die Welle (2) bereitstellt, wobei die Durchführungen (35) voneinander in einer Richtung parallel zu der Mittellinie (23) der Welle (2) beabstandet sind, wobei die Welle (2) durch beide der Durchführungen (35) geführt wird.

6. Elektronische Lenksäulenverriegelung (1) nach einem der Ansprüche 1 bis 5, **dadurch gekennzeichnet, dass** eine jeweilige Ebene, die durch die Hauptfortführung einer jeweiligen Scheibe (14) des ersten Typs definiert ist, und eine jeweilige Ebene, die durch die Hauptfortführung einer jeweiligen Scheibe (15) des zweiten Typs definiert ist, senkrecht zu der Mittellinie (23) der Welle (2) verläuft.

7. Elektronische Lenksäulenverriegelung (1) nach einem der Ansprüche 1 bis 6, **dadurch gekennzeichnet, dass** der Elektromagnet (3) einen ferromagnetischen Kern (4) und eine Spule (5) aufweist.

8. Elektronische Lenksäulenverriegelung (1) nach einem der Ansprüche 1 bis 7, **dadurch gekennzeichnet, dass** die Welle (2) aus nichtmagnetischem Material gefertigt ist.

9. Elektronische Lenksäulenverriegelung (1) nach einem der Ansprüche 1 bis 8, **dadurch gekennzeichnet, dass**: das Gehäuse (7) eine Innenwand (20) aufweist, die die Scheiben (14, 15) umgibt, mindestens eine Kerbe (22) oder eine Anzahl von Kerben (22) an einer Innenfläche (21) des Gehäuses (7) gebildet sind, jede Kerbe (22) sich jeweils parallel zu der Mittellinie (23) der Welle (2) erstreckt, jede der Scheiben (14) des ersten Typs an ihrem jeweiligen äußeren Rand mindestens einen radialen Vorsprung (17) oder eine Anzahl radialer Vorsprünge (17) aufweist, wobei jeder einzelne der Vorsprünge (17) der Scheiben (14) in eine der Kerben (22) greift, um eine Rotationsformverriegelung der jeweiligen Scheiben (14) mit dem Gehäuse (7) in Bezug auf die Mittellinie (23) der Welle (2) bereitzustellen, wobei mindestens eine der mindestens einen Kerbe (26) oder einer Anzahl von Kerben (26) an einer Außenfläche der Welle (2) gebildet ist, wobei sich jede Kerbe (26) jeweils parallel zu der Mittellinie (23) der Welle (2) erstreckt, jede der Scheiben (15) des zweiten Typs an ihrem jeweiligen inneren Rand mindestens einen radialen Vorsprung (18) oder eine Anzahl radialer Vorsprünge (18) aufweist, wobei jeder einzelne der Vorsprünge (18) der Scheiben (15) in eine der Kerben (26) greift, um eine Rotationsformverriegelung der jeweiligen Scheiben (15) an der Welle (2) in Bezug auf die Mittellinie (23) der Welle (2) bereitzustellen.

10. Elektronische Lenksäulenverriegelung (1) nach einem der Ansprüche 1 bis 9, **dadurch gekennzeichnet, dass**: das Gehäuse (2) eine Außenhülle (8) aufweist, insbesondere eine umgebende Seitenwand (10), eine untere Wand (11) und eine obere Wand (12) aufweist, wobei die Außenhülle (8) ferromagnetisches Material aufweist oder aus ferromagnetischem Material besteht.

11. Elektronische Lenksäulenverriegelung (1) nach einem der Ansprüche 1 bis 10, **dadurch gekennzeichnet, dass**: das Gehäuse (2) einen Mantel (9) aufweist, der innerhalb der Außenhülle (8) befestigt ist, wobei der Mantel (9) nichtmagnetisches Material aufweist oder aus nichtmagnetischem Material besteht und/oder der Mantel Isoliermaterial aufweist oder aus Isoliermaterial besteht, wobei die axiale Kerbe oder die axialen Kerben insbesondere auf der Innenfläche des Mantels gebildet sind.

12. Elektronische Lenksäulenverriegelung (1) nach einem der Ansprüche 1 bis 11, **dadurch gekennzeichnet, dass** jede Scheibe (14, 15) an ihren beiden gegenüber liegenden Oberflächen (31, 32) ein Muster aufweist, das miteinander alternierende kreisförmige Rillen (36) und kreisförmige Vorsprünge (37) aufweist, wobei sich die kreisförmigen Rillen (36) und die kreisförmigen Vorsprünge (37) konzentrisch in Bezug zu der Mittellinie (23) der Welle (2) erstrecken, wobei sich an jedem Radius, wo sich in einer der beiden Oberflächen (31, 32) eine Rille (36) erstreckt, in der anderen der beiden Oberflächen (31, 32) ein Vorsprung (37) erstreckt, und anders herum, wobei insbesondere in einem Querschnitt eine Krümmung der Rillen (36) an ihrem jeweiligen Scheitel einen Radius (r) aufweist, der verglichen mit einem Radius (R) einer Krümmung der Vorsprünge (37) an deren jeweiligem Scheitel kleiner ist, und wobei insbesondere an jeder der Oberflächen (31, 32) die alternierenden Rillen (36) und Vorsprünge (37) ein wellenartiges Profil in Schnittebenen bilden, die die Mittellinie (23) der Welle (2) einschließen.

13. Elektronische Lenksäulenverriegelung (1) nach Anspruch 12, **dadurch gekennzeichnet, dass** die Scheiben (14, 15) in Bezug auf jedes jeweils benachbarte Paar von Scheiben gestapelt sind, welches eine Scheibe des ersten Typs und eine Scheibe des zweiten Typs aufweist, so dass: Vorsprünge (37) der Scheibe (14) des ersten Typs und Rillen (36) der Scheibe (15) des zweiten Typs ineinander greifen und an einen insbesondere runden Zwischenraum (33) grenzen, der magnetorheologisches Fluid (30) einschließt, und Vorsprünge (37) der Scheibe (15) des zweiten Typs und Rillen (36) der Scheibe (14) des ersten Typs ineinander greifen und an einen insbesondere runden Zwischenraum (33) grenzen, der magnetorheologisches Fluid (30) einschließt.

14. Elektronische Lenksäulenverriegelung (1) nach einem der Ansprüche 1 bis 13, **dadurch gekennzeichnet, dass**: das Gehäuse (7) an einem Fahrzeug befestigt ist oder ausgebildet ist, um an einem Fahrzeug befestigt zu werden, insbesondere an einem Armaturenbrett eines Fahrzeugs.

15. Elektronische Lenksäulenverriegelung (1) nach einem der Ansprüche 1 bis 14, **dadurch gekennzeichnet, dass**: die elektronische Lenksäulenverriegelung (1) eine Stromversorgungseinheit und eine Steuereinheit aufweist, die an die Stromversorgungseinheit und an den Elektromagneten (3) gekoppelt ist, wobei die Steuereinheit ausgebildet ist, um dem Elektromagneten (3) eine elektrische Spannung bereitzustellen, die durch die Steuereinheit gesteuert wird, und dass die elektronische Lenksäulenverriegelung (1) einen externen Sensor aufweist, der ausgebildet ist, um eine Variable abzufühlen, wobei die Steuereinheit ausgebildet ist, um die elektrische Spannung entsprechend einem Signal zu steuern, das durch den externen Sensor bereitgestellt wird.

## Revendications

1. Système de verrouillage de colonne de direction électronique (1) comprenant :
un arbre (2), ledit arbre étant un arbre de colonne de direction ou ledit arbre étant configuré pour être accouplé à un arbre de colonne de direction, un logement (7), un électroaimant (3), disposé à un endroit fixe à l'intérieur du logement (7), au moins un disque (14) d'un premier type étant solidarisé par complémentarité de forme à rotation avec le logement (7) par rapport à la ligne médiane (23) de l'arbre (2), au moins un disque (15) d'un second type étant solidarisé par complémentarité de forme à rotation avec l'arbre (2) par rapport à la ligne médiane (23) de l'arbre (2), le disque (14) du premier type et le disque (15) du second type étant disposés de manière adjacente l'un à l'autre sur un même côté de l'électroaimant (3) à l'intérieur du logement (7), au moins un desdits deux disques (14, 15) disposés de manière adjacente pouvant être déplacé dans une direction parallèle à la ligne médiane (23) ou lesdits disques (14, 15) pouvant être tous les deux déplacés dans une direction parallèle à la ligne médiane (23), une surface (31) du disque (14) du premier type et une surface (32) du disque (15) du second type se trouvant face à face, la forme de ladite surface (31) du disque (14) du premier type et la forme de la surface (32) dudit disque (15) du second type étant conçues de telle sorte que des espacements (33) restent entre lesdites deux surfaces (31, 32) si ladite surface (31) du disque (14) du premier type et ladite surface (32) du disque (15) du second type sont légèrement en contact l'une avec l'autre, ledit disque (14) du premier type et ledit disque (15) du second type étant constitués d'un matériau ferromagnétique ou comprenant un matériau ferromagnétique, un fluide magnéto-rhéologique (30) étant maintenu dans le logement (7), et le disque (14) du premier type et le disque (15) du second type étant immergés, en particulier étant complètement immergés, dans le fluide magnéto-rhéologique (30).

2. Système de verrouillage de colonne de direction électronique (1) selon la revendication 1, **caractérisé en ce que** le système de verrouillage de colonne de direction électronique (1) : comprend de multiples disques (14) du premier type, respectivement solidarisés par complémentarité de forme à rotation avec le logement (7) par rapport à la ligne médiane (23) de l'arbre (2), comprend de multiples disques (15) du second type, respectivement solidarisés par complémentarité de forme à rotation avec l'arbre (2) par rapport à la ligne médiane (23) de l'arbre (2), **en ce qu'**un premier ensemble comprenant des disques (14) du premier type et un second ensemble comprenant des disques (15) du second type sont disposés sur le même côté de l'électroaimant (3), lesdits disques (14) du premier ensemble et lesdits disques (15) du second ensemble étant disposés de manière alternée les uns par rapport aux autres, les disques (14) restants du premier type et les disques (15) restants du second type étant disposés de manière alternée les par rapport aux autres sur l'autre côté de l'électroaimant (3), pour chaque paire adjacente respective de disques comprenant un disque (14) du premier type et un disque (15) du second type :
- une surface (31) du disque (14) du premier type et une surface (32) du disque (15) du second type se trouvant face à face, et
- la forme de ladite surface (31) du disque (14) du premier type et la forme de la surface (32) dudit disque (15) du second type étant conçues de telle sorte que des espacements (33) restent entre lesdites deux surfaces (31, 32) si ladite surface (31) dudit disque (14) du premier type et ladite surface (32) dudit disque (15) du second type sont légèrement en contact l'une avec l'autre.

3. Système de verrouillage de colonne de direction électronique (1) selon l'une quelconque des revendications 1 et 2, **caractérisé en ce que** : chaque disque (14) du premier type peut coulisser par rapport au logement (7) parallèlement à la ligne médiane (23) de l'arbre (2), respectivement, et chaque disque (15) du second type peut coulisser par rapport à l'arbre (2) parallèlement à la ligne médiane (23) de l'arbre (2), respectivement.

4. Système de verrouillage de colonne de direction électronique (1) selon l'une quelconque des revendications 1 à 3, **caractérisé en ce que** : chaque disque (14) du premier type et chaque disque (15) d'un second type comprend une ouverture centrale (16), respectivement, l'arbre (2) s'étendant axialement à travers lesdites ouvertures centrales (16) respectives.

5. Système de verrouillage de colonne de direction électronique (1) selon l'une quelconque des revendications 1 à 4, **caractérisé en ce que** : ledit logement (7) définit deux passages rotatifs (35) pour l'arbre (2), lesdits passages (35) étant espacés l'un de l'autre dans une direction parallèle à la ligne médiane (23) de l'arbre (2), l'arbre (2) étant inséré à travers les deux passages (35).

6. Système de verrouillage de colonne de direction électronique (1) selon l'une quelconque des revendications 1 à 5, **caractérisé en ce qu'**un plan respectif défini par l'étendue principale d'un disque (14) du premier type respectif et un plan respectif défini par l'étendue principale d'un disque (15) du second type respectif est perpendiculaire à la ligne médiane (23) de l'arbre (2).

7. Système de verrouillage de colonne de direction électronique (1) selon l'une quelconque des revendications 1 à 6, **caractérisé en ce que** l'électroaimant (3) comprend un noyau ferromagnétique (4) et une bobine (5).

8. Système de verrouillage de colonne de direction électronique (1) selon l'une quelconque des revendications 1 à 7, **caractérisé en ce que** l'arbre (2) est constitué d'un matériau non-magnétique.

9. Système de verrouillage de colonne de direction électronique (1) selon l'une quelconque des revendications 1 à 8, **caractérisé en ce que** : le logement (7) comporte une paroi intérieure (20) entourant lesdits disques (14, 15), au moins un cran (22) ou un certain nombre de crans (22) sont formés au niveau d'une surface intérieure (21) du logement (7), chaque cran (22) s'étendant respectivement parallèlement à la ligne médiane (23) de l'arbre (2), chacun des disques (14) du premier type au niveau de son bord extérieur respectif comprend au moins une protubérance radiale (17) ou un certain nombre de protubérances radiales (17), chaque protubérance individuelle parmi lesdites protubérances (17) des disques (14) s'emboîtant dans l'un des crans (22) afin de réaliser une solidarisation par complémentarité de forme à rotation desdits disques (14) respectifs avec le logement (7) par rapport à la ligne médiane (23) de l'arbre (2), au moins un cran (26) ou un certain nombre de crans (26) est formé au niveau d'une surface extérieure de l'arbre (2), chaque cran (26) s'étendant respectivement parallèlement à la ligne médiane (23) de l'arbre (2), chacun des disques (15) du second type au niveau de son bord intérieur respectif comprend au moins une protubérance radiale (18) ou un certain nombre de protubérances radiales (18), chaque protubérance individuelle parmi lesdites protubérances (18) des disques (15) s'emboîtant dans l'un des crans (26) afin de réaliser une solidarisation par complémentarité de forme à rotation desdits disques (15) respectifs avec l'arbre (2) par rapport à la ligne médiane (23) de l'arbre (2).

10. Système de verrouillage de colonne de direction électronique (1) selon l'une quelconque des revendications 1 à 9, **caractérisé en ce que** : le logement (7) comprend un carter extérieur (8), en particulier comprend une paroi latérale périphérique (10), une paroi inférieure (11) et une paroi supérieure (12), le carter extérieur (8) comprenant un matériau ferromagnétique ou étant constitué d'un matériau ferromagnétique.

11. Système de verrouillage de colonne de direction électronique (1) selon l'une quelconque des revendications 1 à 10, **caractérisé en ce que** : le logement (7) comprend une coque (9) fixée à l'intérieur dudit carter extérieur (8), ladite coque (9) comprend un matériau non-magnétique ou est constituée d'un matériau non-magnétique et/ou ladite coque comprend un matériau isolant ou est constituée d'un matériau isolant, en particulier le cran axial ou les crans axiaux étant formés au niveau d'une surface intérieure de la coque.

12. Système de verrouillage de colonne de direction électronique (1) selon l'une quelconque des revendications 1 à 11, **caractérisé en ce que** chaque disque (14, 15) au niveau de ses deux surfaces opposées (31, 32) comporte un motif comprenant des rainures circulaires (36) et des protubérances circulaires (37) alternées les unes par rapport aux autres, les rainures circulaires (36) et les protubérances circulaires (37) s'étendant de manière concentrique par rapport à la ligne médiane (23) de l'arbre (2), à chaque rayon où une rainure (36) s'étend au niveau de l'une desdites deux surfaces (31, 32), une protubérance (37) s'étend au niveau de l'autre desdites deux surfaces (31, 32) et vice versa, respectivement, en particulier dans une section transversale une courbure des rainures (36) au niveau de son sommet respectif présentant un rayon (r) qui est inférieur par comparaison avec un rayon (R) d'une courbure des protubérances (37) au niveau de son sommet respectif et en particulier au niveau de chacune desdites surfaces (31, 32) les rainures (36) et les protubérances (37) alternées formant un profil ondulé dans des plans en section comprenant la ligne médiane (23) de l'arbre (2).

13. Système de verrouillage de colonne de direction électronique (1) selon la revendication 12, **caractérisé en ce que** les disques (14, 15) sont empilés par rapport à chaque paire voisine respective de disques comprenant un disque du premier type et un disque du second type de telle sorte que : des protubérances (37) dudit disque (14) du premier type et des rainures (36) dudit disque (15) du second type s'emboîtent les unes dans les autres et délimitent un espacement (33), en particulier circulaire, comprenant du fluide magnéto-rhéologique (30), et des protubérances (37) dudit disque (15) du second type et des rainures (36) dudit disque (14) du premier type s'emboîtent les unes dans les autres et délimitent un espacement (33), en particulier circulaire, comprenant du fluide magnéto-rhéologique.

14. Système de verrouillage de colonne de direction électronique (1) selon l'une quelconque des revendications 1 à 13, **caractérisé en ce que** : le logement (7) est fixé ou est configuré pour être fixé à un véhicule, en particulier à un tableau de bord d'un véhicule.

15. Système de verrouillage de colonne direction électronique (1) selon l'une quelconque des revendications 1 à 14, **caractérisé en ce que** : le système de verrouillage de colonne de direction électronique (1) comprend une unité d'alimentation en énergie et une unité de commande accouplée à l'unité d'alimentation en énergie et l'électroaimant (3), l'unité de commande étant configurée pour délivrer une tension électrique commandée par l'unité de commande à l'électroaimant (3), et **en ce que** le système de verrouillage de colonne de direction électronique (1) comprend un capteur extérieur configuré pour détecter une variable, l'unité de commande étant configurée pour commander la tension électrique en fonction d'un signal fourni par le capteur extérieur.
